# EUROPÄISCHE PATENTSCHRIFT

(11) **EP 4 527 547 B1**
(45) Veröffentlichungstag und Bekanntmachung des Hinweises auf die Patenterteilung: **03.09.2025**
(21) Anmeldenummer: 23199559.8
(22) Anmeldetag: 25.09.2023
(51) Int. Cl.: B23Q 3/06, B23B 31/30, B23Q 3/08

(54) **SPANNVORRICHTUNG FÜR EINEN SCROLL-VERDICHTER**
TENSIONING DEVICE FOR A SCROLL COMPRESSOR
DISPOSITIF DE SERRAGE POUR UN COMPRESSEUR SCROLL

(43) Veröffentlichungstag der Anmeldung: 26.03.2025
(73) Patentinhaber: Schwäbische Werkzeugmaschinen GmbH, 78713 Schramberg-Waldmössingen (DE)
(72) Erfinder: Bihler, Oliver, 78662 Bösingen (DE)
(74) Vertreter: Schorr, Peter Karl

(56) Entgegenhaltungen:
- CN-A- 102 380 780
- CN-A- 115 213 642
- CN-U- 213 411 215
- SU-A1- 764 938
- US-A1- 2021 252 609

## Beschreibung

Die Erfindung betrifft eine Spannvorrichtung für einen Scroll-Verdichter mit mindestens einem Rahmen, der eine um eine Zentralachse kreisrund verlaufend ausgebildete, durchgehende Öffnung aufweist, die durch eine Innenwand des Rahmens umgeben ist, mit mindestens einer in der Öffnung des Rahmens angeordneten Spannhülse, die einen um die Zentralachse umlaufenden Anlageabschnitt aufweist, der mit einer korrespondierend, insbesondere komplementär, zur Innenwand des Rahmens ausgebildeten Außenfläche an der Innenwand des Rahmens flächenhaft anliegt, und die einen um die Zentralachse umlaufenden Spannabschnitt umfasst, der eine um die Zentralachse kreisrund verlaufend ausgebildete, durchgehende Ausnehmung aufweist, die durch eine Innenfläche der Spannhülse umgeben ist, an der ein Werkstück, insbesondere ein F- oder O-Scroll, flächenhaft anliegend anordenbar ist, und mit mindestens einer Spanneinheit, die mindestens ein Spannmittel umfasst, das zwischen Spannhülse und Rahmen angeordnet ist und durch das eine entlang der Umfangsrichtung bezüglich der Zentralachse gleichmäßig verteilte, auf den Spannabschnitt in Richtung Zentralachse wirkende Kraft aufbaubar ist, wobei der Spannabschnitt der Spannhülse durch die auf den Spannabschnitt wirkende Kraft von einer Grundstellung, in der der Innendurchmesser der Ausnehmung maximal ist, in mindestens eine Spannstellung überführbar ist, in der der Innendurchmesser der Ausnehmung bezüglich der Grundstellung reduziert ist.

Spannvorrichtungen für Scroll-Verdichter sind aus dem Stand der Technik in unterschiedlichen Ausführungsformen bekannt.

Scroll-Verdichter bestehen grundsätzlich aus zwei beweglichen, ineinander gefügten, schneckenförmigen Bauteilen. Einer der beiden Scroll-Verdichter ist fest mit dem Gehäuse verbaut und wird als "fixed Scroll" oder "F-Scroll" bezeichnet. Der weitere Scroll-Verdichter ist exzentrisch auf einer Welle beweglich montiert und wird als "orbiting Scroll" oder "O-Scroll" bezeichnet.

Die einzelnen Scrolls müssen für eine mechanische Bearbeitung sicher und bezüglich einer Raumausrichtung orientiert gespannt werden.

Aus dem Stand der Technik sind Spannkonzepte bekannt, bei denen die Scrolls, hauptsächlich die O-Scrolls, außenliegende Spann-Nuten umfassen, in die eine Spannvorrichtung mit einem oder mehreren Spannstiften oder Pins eingreift und hierdurch die Scrolls zentrisch spannt und axial ausrichtet. Bei dieser Art der Einspannung sind die Scrolls von zwei Seiten aus bearbeitbar, wodurch diese nicht umgespannt werden müssen.

Darüber hinaus sind Spannkonzepte bekannt, bei denen die Scrolls keine Spann-Nuten umfassen und die Spannvorrichtung beispielsweise ein Spiralfutter, ein Hydrodehnspannfutter, ein Spannzangenfutter oder ein Polygonspannfutter umfasst. Bei all den vorgenannten Spannvorrichtungen hat es sich als nachteilig herausgestellt, dass das der Scroll nur von einer Seite aus bearbeitet werden kann und die gegenüberliegende Seite erst nach einem Umspannen des Werkstücks bearbeitet werden kann. Dies erweist sich als aufwändig und zeitintensiv.

Gattungsgemäße Spannvorrichtungen sind bekannt aus CN 102 380 780 A, US 2021/252609 A1 und SU 764 938 A1.

Eine Aufgabe eines Ausführungsbeispiels der Erfindung ist, eine Spannvorrichtung für einen Scroll-Verdichter vorzuschlagen, mit der das zu bearbeitende Werkstück von mindestens zwei Seiten aus zugänglich und bearbeitbar ist.

Diese Aufgabe wird einer eingangs genannten Spannvorrichtung für einen Scroll-Verdichter dadurch gelöst, dass die Spannhülse mindestens zwei Materialschwächungsabschnitte umfasst, die auf beiden Seiten des Spannabschnitts jeweils zwischen dem Anlageabschnitt und dem Spannabschnitt angeordnet sind und den Spannabschnitt mit dem Anlageabschnitt verbinden, die den Hohlraum zwischen Spannabschnitt und Anlageabschnitt begrenzen und die beim Aufbau der Kraft durch das Spannmittel verformbar sind.

Dadurch, dass sowohl der Rahmen eine durchgehende Öffnung, als auch die Spannhülse eine durchgehende Ausnehmung umfasst, ist das in der Spannhülse eingespannte Werkstück von beiden Seiten aus zugänglich. Hierdurch ist eine Bearbeitung des Werkstücks von beiden Seiten ermöglicht, ohne das Werkstück umspannen zu müssen.

Durch die Materialschwächungsabschnitte ist eine leichtere Verformbarkeit und ein leichteres Verschieben des Spannabschnitts in Richtung Zentralachse ermöglicht. Die Materialschwächungsabschnitte wirken technisch ähnlich einem Filmscharnier.

Das Werkstück kann einen F-Scroll umfassen. Unter "F-Scroll wird" ein festgelegter Scroll eines Scroll-Verdichters verstanden, ein so genannter "fixed Scroll". Darüber hinaus kann das Werkstück einen O-Scroll umfassen. Unter einem "O-Scroll" wird eine Komponente eines Scroll-Verdichters verstanden, der exzentrisch auf einer Welle beweglich montierbar ist. Derartige Scrolls werden auch als "orbiting" Scrolls oder "O-Scrolls" bezeichnet. Dadurch, dass die Spannhülse mit der Spannfläche flächenhaft am Werkstück anliegt und der Spannabschnitt durch das Spannmittel von der Grundstellung in mindestens eine Spannstellung überführbar ist, ist das Werkstück kraft-, bzw. reibschlüssig festlegbar. Hierdurch müssen an dem Werkstück keine Vertiefungen, beispielsweise in Form von Nuten, vorgesehen sein, um einen zusätzlichen Formschluss herzustellen. Ferner sind die notwendigen Bearbeitungsschritte reduzierbar und ein Einspannen von Werkstücken vereinfacht.

Das mindestens eine Spannmittel der Spanneinheit kann grundsätzlich beliebig zwischen Spannhülse und Rahmen angeordnet sein, sofern es auf den Spannabschnitt der Spannhülse wirken kann. Um die Spannvorrichtung kompakt auszubilden, erweist es sich als vorteilhaft, wenn die Spannhülse einen quer zur Zentralachse in Umfangsrichtung verlaufenden nutartigen Hohlraum umfasst, der in der Außenseite des Anlageabschnitts angeordnet ist, der bezüglich der Zentralachse in Gänze umlaufend ist und der in Richtung Rahmen hin geöffnet ist, wobei der Spannabschnitt den Hohlraum auf der der Außenseite abgewandten Seite in Gänze oder zumindest abschnittsweise begrenzt und wobei mindestens eines des mindestens einen Spannmittels im Hohlraum anordenbar oder angeordnet ist.

Hierdurch kann das mindestens eine Spannmittel der Spanneinheit in Gänze in der Spannhülse eingebettet sein, wobei die Spannhülse solchenfalls eine Art Gehäuse bildet.

Der Spannabschnitt der Spannhülse kann grundsätzlich beliebig ausgebildet sein, sofern er der technischen Funktion nachkommt, beim Erhöhen der Spannkraft durch das Spannmittel in Richtung Zentralachse bewegt zu werden. Solchenfalls kann der Spannabschnitt der Spannhülse beispielsweise einen zum Anlageabschnitt durch den Hohlraum beabstandeten dünnen Wandabschnitt umfassen, der sich durch Erhöhen der Kraft durch das Spannmittel in Richtung Zentralachse verformt.

Der Spannabschnitt kann einen dünnen Wandbereich umfassen. Darüber hinaus sieht eine Ausbildung der Spannvorrichtung vor, dass der Spannabschnitt scheibenförmig ausgebildet ist und einen inneren Randbereich, der die Innenfläche umfasst, an der das Werkstück zum Spannen anliegt, einen äußeren Randbereich, der an den Hohlraum angrenzt, und einen den inneren Randbereich mit dem äußeren Randbereich verbindenden, last- und kraftaufnehmenden scheibenförmigen Zwischenbereich umfasst.

Durch das Ausbilden des Spannabschnitts in Form einer Scheibe, sind innerer Randbereich und äußerer Randbereich durch den Zwischenbereich zueinander beabstandet. Hierdurch ist ein Abstand das des eingespannten Werkstücks zum Anlageabschnitt der Spannhülse und zum Rahmen vergrößert, wodurch ein Bearbeiten des Werkstücks erleichtert ist.

Bei einer Weiterbildung letztgenannter Ausführungsform sind Ausführungsformen denkbar, bei denen der Zwischenbereich massiv ausgebildet ist oder bei denen der Zwischenbereich eine Mehrzahl von speichenartigen Stützelementen umfasst, die sich um die Zentralachse gleichmäßig verteilt vom inneren Randbereich bis zum äußeren Randbereich erstrecken, wobei zwei benachbarte Stützelemente, innerer Randbereich und äußerer Randbereich einen materialfreien Freischnitt umgeben.

Je nachdem, ob der Zwischenbereich massiv ausgebildet ist oder eine Mehrzahl von speichenartigen Stützelementen umfasst, bewirkt ein und dieselbe Kraft, die durch das Spannmittel am äußeren Randbereich in den Spannabschnitt eingeleitet wird, eine andere am inneren Randbereich des Spannabschnitts wirkende Spannkraft auf das Werkstück. Durch das Ausbilden des Zwischenbereichs durch eine Mehrzahl von speichenartigen Stützelementen, kann am Werkstück eine höhere Spannkraft erzeugt werden als bei Ausführungsformen, bei denen der Zwischenbereich massiv ausgebildet ist.

Ferner hat auch die Anzahl und das Ausgestalten der Mehrzahl von speichenartigen Stützelementen einen Einfluss auf die vom äußeren Randbereich in Richtung auf den inneren Randbereich übertragenen Kraft zum Spannen des Werkstücks.

So erweist es sich bei einer Weiterbildung der Ausführungsform des eine Mehrzahl von speichenartigen Stützelementen umfassenden Stützbereichs als vorteilhaft, wenn mindestens eines der Mehrzahl von speichenartigen Stützelementen in einer Ebene quer zur Zentralachse einen sich vom inneren Randbereich bis hin zum äußeren Randbereich erweiternden Querschnitt umfasst und/oder wenn mindestens eines der Mehrzahl von speichenartigen Stützelementen in einer Ebene quer zur Zentralachse einen V- oder Y-artigen Querschnitt umfasst, der sich bezüglich der Zentralachse nach Außen hin öffnet.

Durch das Ausbilden der Mehrzahl von speichenartigen Stützelementen in einem V- oder Y-artigen Querschnitt, ist ein "Einfedern" und "Ausfedern" beim Spannen und Lösen des Werkstücks ermöglicht. Darüber hinaus ist hierdurch ein Anpassen an kleinere Querschnitte vereinfacht.

Dieser Effekt lässt sich weiter verbessern, wenn mindestens einer des mindestens einen Freischnitts in einer Ebene quer zur Zentralachse einen verrundeten Querschnitt umfasst und/oder verrundete Ecken umfasst.

Wenn die Freischnitte einen verrundeten Querschnitt oder verrundete Ecken umfassen, kann die Lebensdauer der Spannvorrichtung erhöht sein. Solchenfalls ist die Gefahr eines Bildens von Rissen reduziert.

Es erweist sich als vorteilhaft, wenn der Anlageabschnitt, der Spannabschnitt und die Materialschwächungsabschnitte der Spannhülse ein gemeinsames einstückiges Bauteil bilden und/oder wenn Spannhülse und Rahmen zwei separate oder voneinander separierbare Bauteile bilden.

Wenn der Anlageabschnitt, der Spannabschnitt und die Materialschwächungsabschnitte der Spannhülse ein gemeinsames, einstückiges Bauteil bilden, kann die Spannvorrichtung bauteilreduziert ausgebildet sein. Wenn Spannhülse und Rahmen zwei separate oder voneinander separierbare Bauteile bilden, kann die Spannvorrichtung auf einfache Weise an unterschiedliche, zu bearbeitende Werkzeuge angepasst werden, in dem eine entsprechende Spannhülse in den Rahmen eingesetzt wird.

Um die Zugänglichkeit des Spannmittels der Spanneinheit von außen zu erleichtern, erweist es sich als vorteilhaft, wenn der Rahmen eine quer oder schräg zur Zentralachse verlaufende Aussparung aufweist, die von einer Außenwand des Rahmens zur Innenwand des Rahmens erstreckt ist und die in dem Hohlraum mündet.

Solchenfalls kann beispielsweise eine elektrische Verbindung nach außen hergestellt werden, wenn das Spannmittel der Spanneinheit ein elektrisches, elektromagnetisches oder magnetisches Spannmittel umfasst. Darüber hinaus kann über die Aussparung auch eine mechanische Anlenkung erfolgen, wenn das Spannmittel ein mechanisches Spannmittel umfasst. Ferner kann eine pneumatische oder hydraulische Verbindung hergestellt werden, wenn das Spannmittel hydraulisch oder pneumatisch arbeitet.

Das Spannmittel kann elektrisch, elektromagnetisch, magnetisch, mechanisch, pneumatisch und/oder hydraulisch arbeiten und ein entsprechendes Spannmittel umfassen. Bei einer Weiterbildung letztgenannter Ausführungsform erweist es sich als vorteilhaft, wenn das Spannmittel der Spanneinheit ein Fluid umfasst, das über die Aussparung im Rahmen dem Hohlraum zuführbar ist und dass die Spanneinheit ein Druckaufbaumittel umfasst, durch das das im Hohlraum angeordnete Fluid mit Druck beaufschlagbar ist, wobei die in Richtung Zentralachse wirkende Kraft eine Druckkraft umfasst.

Solchenfalls arbeitet das Spannmittel hydraulisch oder pneumatisch. Das Fluid kann ein Gas oder eine Flüssigkeit umfassen.

Um eine ausreichend hohe Kraft auf die Spannhülse zu übertragen, kann der Druck, der durch das Druckaufbaumittel in dem ein Fluid umfassenden Spannmittel aufgebaut wird, 50 bar bis 200 bar umfassen.

Um den Hohlraum in der Spannhülse in Richtung der Zentralachse nach oben und nach unten abzudichten, umfasst ein Ausführungsbeispiel der Spannvorrichtung mindestens zwei Dichtmittel, die jeweils zwischen Anlagefläche der Spannhülse und der Innenwand des Rahmens angeordnet sind, die jeweils bezüglich der Zentralachse in Gänze umlaufend ausgebildet sind und die in Richtung Zentralachse betrachtet zueinander beabstandet und auf einander gegenüberliegenden Seiten bezüglich des Hohlraums angeordnet sind.

Grundsätzlich ist es denkbar, dass die Spannhülse in den Rahmen eingepresst wird. Ein einfaches Anordnen und wieder Entfernen der Spannhülse lässt sich gewährleisten, wenn die Spannvorrichtung mindestens einen ring-, reif- oder scheibenartiges Anschlagmittel umfasst, das am Rahmen festgelegt ist und der bezüglich der Innenwand des Rahmens in Richtung Zentralachse vorspringt und ein Bewegen der Spannhülse entlang einer parallel zur Zentralachse verlaufenden Fügerichtung, entlang der die Spannhülse beim Anordnen im Rahmen in die Öffnung des Rahmens einführbar ist, bei Erreichen einer Endposition, in der die Spannhülse am Absatzbereich berührend anliegt, begrenzt.

Durch das scheibenartige Anschlagmittel kann die Spannhülse auf einfache Weise entlang der Fügerichtung in die Öffnung des Rahmens eingefügt werden. In dem im Rahmen angeordneten Zustands liegt solchenfalls die Spannhülse am Anschlagmittel an und ist, vorzugsweise derart angeordnet, dass eine im Rahmen angeordnete Aussparung in den Hohlraum des Spannmittels mündet.

Bei einer Weiterbildung letztgenannter Ausführungsform erweist es sich als vorteilhaft, wenn die Spannvorrichtung mindestens ein ring-, reif- oder scheibenartiges Hintergriffmittel umfasst, das am Rahmen auf der dem Anschlagmittel abgewandten Seite lösbar festlegbar oder festgelegt ist, das in Richtung Zentralachse erstreckt ist und die Spannhülse quer zur Zentralrichtung zumindest abschnittsweise überlappt und das die im Rahmen angeordnete Spannhülse gegen ein Bewegen entgegen der Fügerichtung hintergreift.

Hierdurch kann die Spannhülse gegen ein Bewegen aus der Öffnung des Rahmens festgelegt werden. Darüber hinaus kann das Hintergriffmittel derart an der Spannhülse anliegen, dass es die Spannhülse in Richtung Anschlagmittel spannt. Hierdurch ist eine Bewegung der Spannhülse parallel zur Zentralachse unterbunden oder zumindest reduziert.

Es werden Ausführungsformen der Spannvorrichtung bevorzugt, bei denen das Anschlagmittel und/oder das Hintergriffmittel lösbar, insbesondere mittels Kraft- und/oder Formschluss, oder unlösbar, insbesondere mittels Stoff-, Kraft- und/oder Formschluss, am Rahmen festlegbar oder festgelegt sind.

Die Spannvorrichtung kann bauteilreduziert ausgebildet sein, wenn der Rahmen und das Anschlagmittel ein gemeinsames einstückiges Bauteil bilden.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Spannvorrichtung.

In der Zeichnung zeigt:

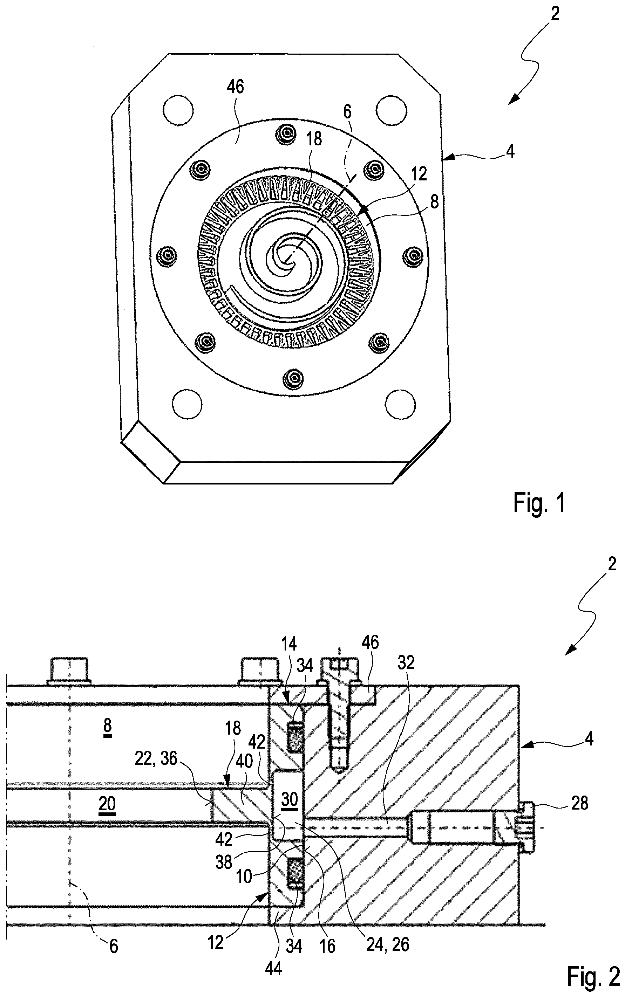

- Figur 1: Eine perspektivische Vorderansicht auf ein erstes Ausführungsbeispiel der Spannvorrichtung;
- Figur 2: Eine geschnittene Teilansicht durch das Ausführungsbeispiel gemäß Figur 1;
- Figur 3: Eine Draufsicht auf eine Spannhülse des Ausführungsbeispiels gemäß Figur 1;
- Figur 4: Eine Draufsicht auf einen Teilabschnitt einer Spannhülse eines zweiten Ausführungsbeispiels der Spannvorrichtung;
- Figur 5: Eine Draufsicht auf einen Teilabschnitt einer Spannhülse eines dritten Ausführungsbeispiels der Spannvorrichtung;
- Figur 6: Eine Draufsicht auf einen Teilabschnitt einer Spannhülse eines vierten Ausführungsbeispiels der Spannvorrichtung.

Die Figuren zeigen Ausführungsbeispiele einer insgesamt mit dem Bezugszeichen 2 versehenen Spannvorrichtung für einen Scroll-Verdichter.

Die Spannvorrichtung 2 umfasst einen Rahmen 4. In dem Rahmen 4 ist eine um eine Zentralachse 6 kreisrund verlaufend ausgebildete, durchgehende Öffnung 8 angeordnet. Die Öffnung 8 ist durch eine Innenwand 10 des Rahmens 4 umgeben.

In der Öffnung 8 des Rahmens 4 der Spannvorrichtung 2, ist eine Spannhülse 12 angeordnet. Die Spannhülse 12 umfasst einen um die Zentralachse 6 umlaufenden Anlageabschnitt 14, der mit einer korrespondierend, insbesondere komplementär zur Innenwand 10 des Rahmens 4 ausgebildeten Außenfläche 16 an der Innenwand 10 des Rahmens 4 flächenhaft anliegt. Die Spannhülse 12 umfasst einen um die Zentralachse 6 umlaufenden Spannabschnitt 18. Dieser umfasst eine um die Zentralachse 6 kreisrund verlaufend ausgebildete, durchgehende Ausnehmung 20. Die Ausnehmung 20 ist durch eine Innenfläche 22 der Spannhülse 12 umgeben. An dem Spannabschnitt 18, insbesondere an der Innenfläche 22 anliegend, ist ein Werkstück, insbesondere ein F- oder O-Scroll, flächenhaft anliegend, anordenbar.

Darüber hinaus umfasst die Spannvorrichtung 2 eine Spanneinheit 24, die mindestens ein Spannmittel 26 umfasst, das zwischen Spannhülse 12 und Rahmen 4 angeordnet ist. Durch das Spannmittel 26 der Spanneinheit 24 ist eine entlang der Umfangsrichtung bezüglich der Zentralachse 6 gleichmäßig verteilte, den Spannabschnitt 18 in Richtung Zentralachse 6 wirkende Kraft, aufbaubar. Durch diese aufgebaute Kraft ist der Spannabschnitt 18 der Spannhülse 12 von einer Grundstellung, in der der Innendurchmesser der Ausnehmung 20 maximal ist, in mindestens eine Spannstellung überführbar, in der der Innendurchmesser der Ausnehmung 20 bezüglich der Grundstellung reduziert ist.

Bei dem in den Figuren gezeigten Ausführungsbeispielen ist das Spannmittel 26 der Spanneinheit 24 durch ein Fluid gebildet, das über ein Druckaufbaumittel 28 mit Druck beaufschlagbar ist. Hierzu umfasst die Spannhülse 12 einen quer zur Zentralachse 6 in Umfangsrichtung verlaufende nutartigen Hohlraum 30, der in der Außenseite des Anlageabschnitts 14 angeordnet ist, der bezüglich der Zentralachse 6 in Gänze umlaufend ist und der in Richtung Rahmen 4 hin geöffnet ist. Um dem Hohlraum 30 Fluid zuzuführen, ist im Rahmen 4 eine Aussparung 32 angeordnet, die mit dem Hohlraum 30 und dem Druckaufbaumittel 28 in Fluidverbindung steht.

Um ein Entweichen von Fluid zu verhindern, umfasst die Spannvorrichtung 2 zwei Dichtmittel 34, die jeweils zwischen Anlagefläche 16 der Spannhülse 12 und der Innenwand 10 des Rahmens 4 angeordnet sind, die bezüglich der Zentralachse 6 in Gänze umlaufend ausgebildet sind und die in Richtung Zentralachse 6 betrachtet, zueinander beabstandet und auf einander gegenüberliegenden Seiten bezüglich des Hohlraums 30 angeordnet sind.

Bei dem in den Figuren gezeigten Ausführungsbeispielen der Spannvorrichtung 2, ist der Spannabschnitt 18 der Spannhülse 12 scheibenförmig ausgebildet. Hierzu umfasst der Spannabschnitt 18 der Spannhülse 12 einen inneren Randbereich 36, der die Innenfläche 22 umfasst, an der das Werkstück zum Spannen anliegt, einen äußeren Randbereich 38, der an dem Hohlraum 30 angrenzt sowie einen den inneren Randbereich 36 mit dem äußeren Randbereich 38 verbindenden, last- und kraftaufnehmenden scheibenförmigen Zwischenbereich 40.

Der Spannabschnitt 18 der Spannhülse 12 ist mit dem Anlageabschnitt 14 der Spannhülse 12 über Materialschwächungsabschnitte 42 miteinander verbunden.

Um die Spannhülse 12 im Rahmen 4 gegen ein Bewegen parallel zur Zentralachse 6 festzulegen, umfasst die Spannvorrichtung 2 ein Anschlagmittel 44, das bei den in den Figuren gezeigten Ausführungsbeispiel am Rahmen 4 festgelegt ist und in Richtung Zentralachse 6 vorspringt. Anschlagmittel 44 und Rahmen 4 sind ein einstückiges, gemeinsames Bauteil. Auf der dem Anschlagmittel 44 gegenüberliegenden Seite umfasst die Spannvorrichtung 2 ein Hintergriffmittel 46, das bei dem in den Figuren gezeigten Ausführungsbeispiel lösbar, nämlich mittels Verschraubens, am Rahmen 4 festlegbar ist.

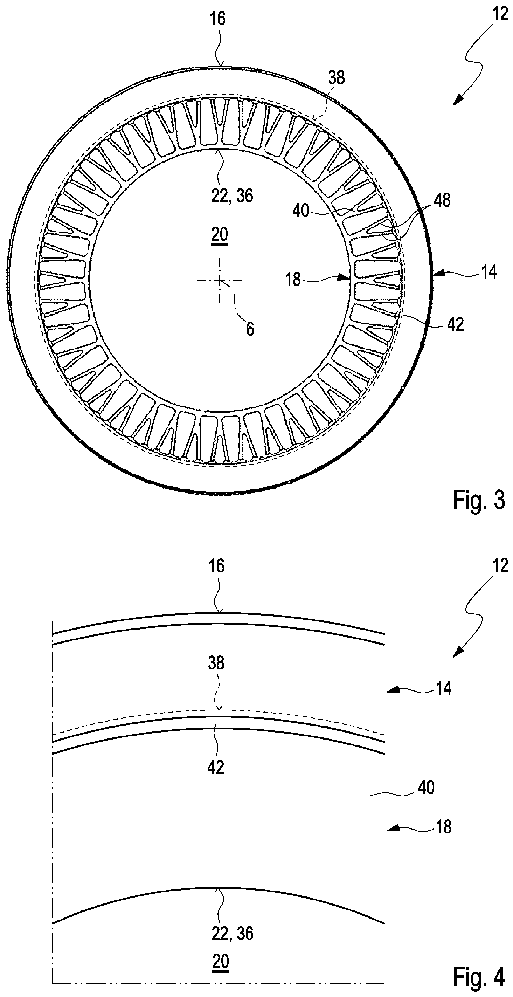

Figur 3 zeigt eine Draufsicht auf eine Spannhülse 12 eines ersten Ausführungsbeispiels der Spannvorrichtung 2. Bei diesen ist der Zwischenbereich 40 durch eine Mehrzahl von speichenartigen Stützelementen 48 gebildet. Diese umfassen bei dem Ausführungsbeispiel gemäß Figur 3 einen V- oder Y-artigen Querschnitt.

Figur 4 zeigt ein zweites Ausführungsbeispiel der Spannvorrichtung 2. Bei diesem umfasst die Spannhülse 12 einen Zwischenbereich 40, der massiv ausgebildet ist.

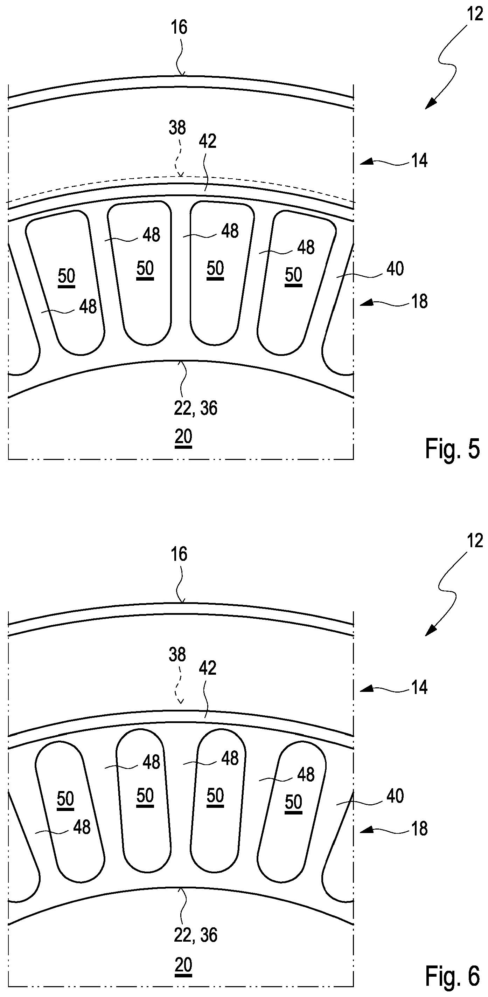

Figur 5 zeigt ein drittes Ausführungsbeispiel der Spannvorrichtung 2, bei der die Spannhülse 12 ebenfalls einen Zwischenbereich 40 mit speichenartigen Stützelementen 48 umfasst. Allerdings sind die Stützelemente 48 im Wesentlichen geradlinig ausgebildet. Die zwischen den Stützelementen 48 angeordneten Freischnitte 50 haben einen verrundeten Querschnitt.

Figur 6 zeigt ein viertes Ausführungsbeispiel der Spannvorrichtung 2, bei der der Zwischenbereich 40 speichenartige Stützelemente 48 umfasst, die sich aus Richtung inneren Randbereich 36 bis hin zum äußeren Randbereich 38 erweitern.

Im Folgenden wird kurz die Wirkungsweise der Spannvorrichtung 2 beschrieben:
Zum Bearbeiten eines Werkstückes kann dieses von der Spannvorrichtung 2 gespannt werden. Hierzu wird zunächst eine Spannhülse 12 in den Rahmen 4 eingesetzt. Dieses erfolgt entlang einer Fügerichtung, die parallel zur Zentralachse 6 verläuft. Wenn die Spannhülse 12 ihre Soll-Position erreicht, liegt die Spannhülse 12 am Anschlagmittel 44 des Rahmens 4 an. Zum Festlegen der Spannhülse 12 wird dann das deckelartige Hintergriffmittel 46 an dem Rahmen 4 festgeschraubt.

Hiernach kann nun ein Werkstück derart in die Spannhülse 12 angeordnet werden, dass das Werkstück an der Innenfläche 22 des Spannabschnitts 18 der Spannhülse 12 anliegt. Zum Spannen des Werkstücks wird dann durch die Spanneinheit 24 das Spannmittel 26 derart angesteuert, dass eine Kraft aufgebaut wird, die den Spannabschnitt 18 der Spannhülse 12 von dessen Grundstellung in mindestens eine Spannstellung überführt. Bei dem in den Figuren gezeigten Ausführungsbeispiel wird hierbei der Druck des Fluids, das sich in dem Hohlraum 30 der Spannhülse 12 befindet, derart erhöht, dass der Spannabschnitt 18 in Richtung Zentralachse 6 gedrückt wird. Eine Relativbewegung wird ermöglicht durch die beiden Materialschwächungsabschnitte 42, die den Spannabschnitt 18 mit dem Anlageabschnitt 14 verbinden. Das Werkstück wird hierdurch kraftschlüssig festgelegt.

### Bezugszeichenliste

- 2: Spannvorrichtung
- 4: Rahmen
- 6: Zentralachse
- 8: Öffnung
- 10: Innenwand
- 12: Spannhülse
- 14: Anlageabschnitt
- 16: Außenfläche
- 18: Spannabschnitt
- 20: Ausnehmung
- 22: Innenfläche
- 24: Spanneinheit
- 26: Spannmittel
- 28: Druckaufbaumittel
- 30: Hohlraum
- 32: Aussparung
- 34: Dichtmittel
- 36: innerer Randbereich
- 38: äußerer Randbereich
- 40: Zwischenbereich
- 42: Materialschwächungsabschnitte
- 44: Anschlagmittel
- 46: Hintergriffmittel
- 48: Stützelement
- 50: Freischnitt

## Patentansprüche

1. Spannvorrichtung (2) für einen Scroll-Verdichter mit mindestens einem Rahmen (4), der eine um eine Zentralachse (6) kreisrund verlaufend ausgebildete, durchgehende Öffnung (8) aufweist, die durch eine Innenwand (10) des Rahmens (4) umgeben ist, mit mindestens einer in der Öffnung (8) des Rahmens (4) angeordneten Spannhülse (12), die einen um die Zentralachse (6) umlaufenden Anlageabschnitt (14) aufweist, der mit einer korrespondierend zur Innenwand (10) des Rahmens (4) ausgebildeten Außenfläche (16) an der Innenwand (10) des Rahmens (4) flächenhaft anliegt, und die einen um die Zentralachse (6) umlaufenden Spannabschnitt (18) umfasst, der eine um die Zentralachse (6) kreisrund verlaufend ausgebildete, durchgehende Ausnehmung (20) aufweist, die durch eine Innenfläche (22) der Spannhülse (12) umgeben ist, an der ein Werkstück flächenhaft anliegend anordenbar ist, und mit mindestens einer Spanneinheit (24), die mindestens ein Spannmittel (26) umfasst, das zwischen Spannhülse (12) und Rahmen (4) angeordnet ist und durch das eine entlang der Umfangsrichtung bezüglich der Zentralachse (6) gleichmäßig verteilte, auf den Spannabschnitt (18) in Richtung Zentralachse (6) wirkende Kraft aufbaubar ist, wobei der Spannabschnitt (18) der Spannhülse (12) durch die auf den Spannabschnitt (18) wirkende Kraft von einer Grundstellung, in der der Innendurchmesser der Ausnehmung (20) maximal ist, in mindestens eine Spannstellung überführbar ist, in der der Innendurchmesser der Ausnehmung (20) bezüglich der Grundstellung reduziert ist, **dadurch gekennzeichnet, dass** die Spannhülse (12) mindestens zwei Materialschwächungsabschnitte (42) umfasst, die auf beiden Seiten des Spannabschnitts (18) jeweils zwischen dem Anlageabschnitt (14) und dem Spannabschnitt (18) angeordnet sind und den Spannabschnitt (18) mit dem Anlageabschnitt (14) verbinden, die den Hohlraum (30) zwischen Spannabschnitt (18) und Anlageabschnitt (14) begrenzen und die beim Aufbau der Kraft durch das Spannmittel (26) verformbar sind.

2. Spannvorrichtung (2) nach Anspruch 1, **dadurch gekennzeichnet, dass** die Spannhülse (12) einen quer zur Zentralachse (6) in Umfangsrichtung verlaufenden nutartigen Hohlraum (30) umfasst, der in der Außenseite des Anlageabschnitts (14) angeordnet ist, der bezüglich der Zentralachse (6) in Gänze umlaufend ist und der in Richtung Rahmen (4) hin geöffnet ist, wobei der Spannabschnitt (18) den Hohlraum (30) auf der der Außenseite abgewandten Seite in Gänze oder zumindest abschnittsweise begrenzt und wobei mindestens eines des mindestens einen Spannmittels (26) im Hohlraum (30) anordenbar oder angeordnet ist.

3. Spannvorrichtung (2) nach Anspruch 1 oder 2, **dadurch**
**gekennzeichnet, dass** der Spannabschnitt (18) scheibenförmig ausgebildet ist und einen inneren Randbereich (36), der die Innenfläche (22) umfasst, an der das Werkstück zum Spannen anliegt, einen äußeren Randbereich (38), der an den Hohlraum (30) angrenzt, und einen den inneren Randbereich (36) mit dem äußeren Randbereich (38) verbindenden, last- und kraftaufnehmenden scheibenförmigen Zwischenbereich (40) umfasst.

4. Spannvorrichtung (2) nach Anspruch 3, **dadurch gekennzeichnet, dass** der Zwischenbereich (40) massiv ausgebildet ist oder dass der Zwischenbereich (40) eine Mehrzahl von speichenartigen Stützelementen (48) umfasst, die sich um die Zentralachse (6) gleichmäßig verteilt vom inneren Randbereich (36) bis zum äußeren Randbereich (38) erstrecken, wobei zwei benachbarte Stützelemente (48), innerer Randbereich (36) und äußerer Randbereich (38) einen materialfreien Freischnitt (50) umgeben.

5. Spannvorrichtung (2) nach Anspruch 4, **dadurch gekennzeichnet, dass** mindestens eines der Mehrzahl von speichenartigen Stützelementen (48) in einer Ebene quer zur Zentralachse (6) einen sich vom inneren Randbereich (36) bis hin zum äußeren Randbereich (38) erweiternden Querschnitt umfasst und/oder dass mindestens eines der Mehrzahl von speichenartigen Stützelementen (48) in einer Ebene quer zur Zentralachse (6) einen V- oder Y-artigen Querschnitt umfasst, der sich bezüglich der Zentralachse (6) nach Außen hin öffnet.

6. Spannvorrichtung (2) nach Anspruch 4 oder 5, **dadurch**
**gekennzeichnet, dass** mindestens einer des mindestens einen Freischnitts (50) in einer Ebene quer zur Zentralachse (6) einen verrundeten Querschnitt umfasst und/oder verrundete Ecken umfasst.

7. Spannvorrichtung (2) nach einem der vorhergehenden Ansprüche,
**dadurch gekennzeichnet, dass** der Anlageabschnitt (14), der Spannabschnitt (18) und die Materialschwächungsabschnitte (42) der Spannhülse (12) ein gemeinsames einstückiges Bauteil bilden und/oder dass Spannhülse (12) und Rahmen (4) zwei separate oder voneinander separierbare Bauteile bilden.

8. Spannvorrichtung (2) nach einem der vorhergehenden Ansprüche,
**dadurch gekennzeichnet, dass** der Rahmen (4) eine quer oder schräg zur Zentralachse (6) verlaufende Aussparung (32) aufweist, die von einer Außenwand des Rahmens (4) zur Innenwand (10) des Rahmens (4) erstreckt ist und die in dem Hohlraum (30) mündet.

9. Spannvorrichtung (2) nach Anspruch 8, **dadurch gekennzeichnet, dass** das Spannmittel (26) der Spanneinheit (24) ein Fluid umfasst, das über die Aussparung (32) im Rahmen (4) dem Hohlraum (30) zuführbar ist und dass die Spanneinheit (24) ein Druckaufbaumittel (28) umfasst, durch das das im Hohlraum (30) angeordnete Fluid mit Druck beaufschlagbar ist, wobei die in Richtung Zentralachse (6) wirkende Kraft eine Druckkraft umfasst.

10. Spannvorrichtung (2) nach einem der vorhergehenden Ansprüche **gekennzeichnet durch** mindestens zwei Dichtmittel (34), die jeweils zwischen Anlagefläche der Spannhülse (12) und der Innenwand (10) des Rahmens (4) angeordnet sind, die jeweils bezüglich der Zentralachse (6) in Gänze umlaufend ausgebildet sind und die in Richtung Zentralachse (6) betrachtet zueinander beabstandet und auf einander gegenüberliegenden Seiten bezüglich des Hohlraums (30) angeordnet sind.

11. Spannvorrichtung (2) nach einem der vorhergehenden Ansprüche, **gekennzeichnet durch** mindestens eine ring-, reif- oder scheibenartiges Anschlagmittel (44), das am Rahmen (4) festgelegt ist und der bezüglich der Innenwand (10) des Rahmens (4) in Richtung Zentralachse (6) vorspringt und ein Bewegen der Spannhülse (12) entlang einer parallel zur Zentralachse (6) verlaufenden Fügerichtung, entlang der die Spannhülse (12) beim Anordnen im Rahmen (4) in die Öffnung (8) des Rahmens (4) einführbar ist, bei Erreichen einer Endposition, in der die Spannhülse (12) am Absatzbereich berührend anliegt, begrenzt.

12. Spannvorrichtung (2) nach Anspruch 11, **gekennzeichnet durch** mindestens ein ring-, reif- oder scheibenartiges Hintergriffmittel (46), das am Rahmen (4) auf der dem Anschlagmittel (44) abgewandten Seite lösbar festlegbar oder festgelegt ist, das in Richtung Zentralachse (6) erstreckt ist und die Spannhülse (12) quer zur Zentralrichtung zumindest abschnittsweise überlappt und das die im Rahmen (4) angeordnete Spannhülse (12) gegen ein Bewegen entgegen der Fügerichtung hintergreift.

13. Spannvorrichtung (2) nach einem der Ansprüche 11 oder 12, **dadurch gekennzeichnet, dass** das Anschlagmittel (44) und/oder das Hintergriffmittel (46) lösbar, insbesondere mittels Kraft- und/oder Formschluss, oder unlösbar, insbesondere mittels Stoff-, Kraftund/oder Formschluss, am Rahmen (4) festlegbar oder festgelegt sind.

14. Spannvorrichtung (2) nach einem der Ansprüche 11 oder 13, **dadurch gekennzeichnet, dass** der Rahmen (4) und das Anschlagmittel (44) ein gemeinsames einstückiges Bauteil bilden.

## Claims

1. Tensioning device (2) for a scroll compressor with at least one frame (4), with a continuous opening (8) running in a circle around a central axis (6), surrounded by an inner wall (10) of the frame (4) with at least one tensioning sleeve (12) arranged in the opening (8) of the frame (4) with a contact section (14) surrounding the central axis (6) that lies flat against the inner wall (10) of the frame (4) with an outer surface (16) that corresponds to, in particular is complementary to, the inner wall (10) of the frame (4), and that comprises a tensioning section (18) revolving around the central axis (6), which has a continuous recess (20) running in a circle around the central axis (6) that is surrounded by an inner surface (22) of the tensioning sleeve (12) on which a workpiece is arranged to lie flat, and with at least one tensioning unit (24) that comprises at least one tensioning means (26) that is arranged between the tensioning sleeve (12) and the frame (4) and through which a force, distributed evenly along the perimeter direction or the central axis (6) and acting on the tensioning section (18) in the direction of the central axis (6) can be increased, wherein the tensioning section (18) of the tensioning sleeve (12) can, by the force acting on the tensioning section (18) from a basic position where the interior diameter of the recess (20) is at a maximum, be transferred to at least one tensioning position in which the interior diameter of the recess (20) is reduced in relation to the base position, **characterised in that** the tensioning sleeve (12) comprises at least two material weakening sections (42), each arranged on both sides of the tensioning section (18) each between the contact section (14) and the tensioning section (18) and that connect the tensioning section (18) with the contact section (14), limiting the cavity (30) between the tensioning section (18) and the contact section (14) and that can be deformed during the build-up of force by the tensioning means (26).

2. Tensioning device (2) according to claim 1, **characterised in that** the tensioning sleeve (12) comprises a groove-like cavity (30) extending transversely to the central axis (6) in the circumferential direction, which is arranged in the outer side of the contact section (14), which is completely circumferential with respect to the central axis (6) and which is open in the direction of the frame (4), wherein the tensioning section (18) delimits the cavity (30) as a whole or at least in sections on the side facing away from the outside and wherein at least one of the at least one tensioning means (26) can be arranged or is arranged in the cavity (30).

3. Tensioning device (2) according to claim 1 or 2, **characterised in that** the tensioning section (18) is disc-shaped and comprises an inner edge region (36), which comprises the inner surface (22), against which the workpiece rests for tensioning, an outer edge region (38), which adjoins the cavity (30), and an inner edge region (36) with a disc-shaped intermediate area (40) that connects to the outer edge area (38) and absorbs the load and force.

4. Tensioning device (2) according to claim 3, **characterised in that** the intermediate region (40) is solid or **in that** the intermediate area (40) comprises multiple spoke-like supporting elements (48) that are evenly distributed around the central axis (6) and extend from the inner edge area (36) to the outer edge area (38), wherein two adjacent supporting elements (48), inner edge area (36) and outer edge area (38) surround a free cut (50) that is material-free.

5. Tensioning device (2) according to claim 4, **characterised in that** at least one of the multiple spoke-like support elements (48) in a plane transverse to the central axis (6) comprises a cross-section that widens from the inner edge region (36) to the outer edge region (38) and/or **in that** at least one of the multiple spoke-like support elements (48) in a plane transverse to the central axis (6) comprises a V-type or Y-type cross-section that opens outwards with respect to the central axis (6).

6. Tensioning device (2) according to claim 4 or 5, **characterised in that** at least one of the at least one free cut (50) comprises a rounded cross-section in a plane transverse to the central axis (6) and/or comprises rounded corners.

7. Tensioning device (2) according to one of the preceding claims,
**characterised in that** the contact section (14), the tensioning section (18) and the material weakening sections (42) of the tensioning sleeve (12) form a common one-piece component and/or **in that** the tensioning sleeve (12) and frame (4) form two separate components or components which can be separated from one another.

8. Tensioning device (2) according to one of the above claims,
**characterised in that** the frame (4) has a cut-out (32) extending transversely or obliquely to the central axis (6), which extends from an outer wall of the frame (4) to the inner wall (10) of the frame (4) and which opens into the cavity (30).

9. Tensioning device (2) according to claim 8, **characterised in that** the tensioning means (26) of the tensioning unit (24) comprises a fluid which can be introduced into the cavity (30) via the cut-out (32) in the frame (4) and **in that** the tensioning unit (24) comprises a pressure build-up mechanism (28) by means of which the fluid arranged in the cavity (30) can be pressurised, wherein the force acting in the direction of the central axis (6) comprises a compressive force.

10. Tensioning device (2) according to one of the above claims,
**characterised by** at least two sealing mechanisms (34), which are each arranged between the stop surface of the tensioning sleeve (12) and the inner wall (10) of the frame (4), which are each designed to be completely circumferential with respect to the central axis (6) and which, viewed in the direction of the central axis (6), are spaced apart from one another and arranged on opposite sides with respect to the cavity (30).

11. Tensioning device (2) according to one of the above claims,
**characterised by** at least one ring, tyre or disc-like stopping mechanism (44), which is fixed to the frame (4) and which protrudes with respect to the inner wall (10) of the frame (4) in the direction of the central axis (6) and limits movement of the tensioning sleeve (12) along a joint direction running parallel to the central axis (6), along which the tensioning sleeve (12) can be inserted into the opening (8) of the frame (4) when arranged in the frame (4), upon reaching an end position in which the tensioning sleeve (12) is in contact with the step area.

12. Tensioning device (2) according to claim 11, **characterised by** at least one ring, tyre or disc-like rear gripping mechanism (46), which is detachably fixable or fixed to the frame (4) on the side facing away from the stopping mechanism (44), which extends in the direction of the central axis (6) and overlaps the tensioning sleeve (12) transversely to the central direction at least in sections and which engages behind the clamping sleeve (12) arranged in the frame (4) to prevent it from moving against the joint direction.

13. Tensioning device (2) according to one of claims 11 or 12,
**characterised in that** the stopping mechanism (44) and/or the rear gripping mechanism (46) can be fixed or secured to the frame (4) in a detachable manner, in particular by means of force-fit and/or form-fit, or in a non-detachable manner, in particular by means of material, force and/or form-fit.

14. Tensioning device (2) according to one of claims 11 or 13,
**characterised in that** the frame (4) and the stopping mechanism (44) form a common one-piece component.

## Revendications

1. Dispositif de serrage (2) pour compresseur scroll avec au moins un cadre (4) présentant une ouverture (8) continue circulaire autour d'un axe central (6), entourée par une paroi intérieure (10) du cadre (4), avec au moins une douille de serrage (12) disposée dans l'ouverture (8) du cadre (4), qui présente un tronçon annexe (14) s'étendant autour de l'axe central (6), qui, avec une surface extérieure (16) correspondant à la paroi intérieure (10) du cadre (4), repose à plat contre la paroi intérieure (10) du cadre (4), qui comprend un tronçon de serrage (18) autour de l'axe central (6) qui présente une cavité (20) continue autour de l'axe central (6) se déroulant circulairement, entourée par une surface intérieure (22) de la douille de serrage (12), sur laquelle la pièce repose à plat, et avec au moins une unité de serrage (24), qui comprend au moins un système de serrage (26), qui est agencé entre la douille de serrage (12) et le cadre (4) et au moyen duquel une force peut être accumulée qui est uniformément répartie le long de la direction circonférentielle par rapport à l'axe central (6) et agit sur le tronçon de serrage (18) dans la direction de l'axe central (6), le tronçon de serrage (18) de la douille de serrage (12) pouvant être transféré d'une position de base, dans laquelle le diamètre intérieur de la cavité (20) est à son maximum, dans au moins une position de serrage par la force agissant sur le tronçon de serrage (18), dans laquelle le diamètre intérieur de la cavité (20) est réduit en ce qui concerne la position de base, **caractérisé en ce que** la douille de serrage (12) comprend au moins 2 tronçons d'affaiblissement du matériau (42), qui sont disposés sur les 2 côtés du tronçon de serrage (18) respectivement entre le tronçon annexe (14) et le tronçon de serrage (18), liant le tronçon de serrage (18) au tronçon annexe (14),délimitant l'espace creux (30) entre le tronçon de serrage (18) et le tronçon annexe (14) qui sont ductiles lorsque la force est accumulée par les systèmes de serrage (26).

2. Dispositif de serrage (2) selon la revendication 1, **caractérisé en ce que** la douille de serrage (12) comprend un espace creux (30) en forme de rainure (30) qui s'étend transversalement à l'axe central (6) dans la direction circonférentielle et qui est disposé sur le côté extérieur du tronçon annexe (14), qui est entièrement circonférentielle par rapport à l'axe central (6) et qui est ouverte en direction du cadre (4), la section de serrage (18) délimitant l'espace creux (30) sur le côté opposé au côté extérieur, entièrement ou au moins par sections, et au moins un desdits systèmes de serrage (26) peut être disposé ou est disposé dans l'espace creux (30).

3. Dispositif de serrage (2) selon la revendication 1 ou 2, **caractérisé en ce que** le tronçon de serrage (18) est en forme de disque et comprend une zone de bord intérieur (36) qui comprend la surface intérieure (22) contre laquelle repose la pièce pour le serrage, une zone de bord extérieur (38) qui jouxte l'espace creux (30), et une zone intermédiaire (40) en forme de disque qui relie la zone de bordure intérieure (36) à la zone de bordure extérieure (38) et qui absorbe les charges et les forces.

4. Dispositif de serrage (2) selon la revendication 3, **caractérisé en ce que** la zone intermédiaire (40) est pleine ou **en ce que** la zone intermédiaire (40) comprend une pluralité d'éléments de soutien (48) en forme de rayons qui s'étendent uniformément répartis autour de l'axe central (6) de la zone de bordure intérieure (36) à la zone de bordure extérieure (38), deux éléments de soutien adjacents (48), la zone de bordure intérieure (36) et la zone de bordure extérieure (38) entourant une découpe (50) sans matériau.

5. Dispositif de serrage (2) selon la revendication 4, **caractérisé en ce qu'**au moins un des nombreux éléments de soutien (48) en forme de rayons présente dans un plan transversal à l'axe central (6) une coupe transversale s'élargissant de la zone de bordure intérieure (36) à la zone de bordure extérieure (38) et/ou **en ce qu'**au moins un des nombreux éléments de soutien (48) en forme de rayons présente dans un plan transversal à l'axe central (6) une coupe transversale en forme de V ou de Y qui s'ouvre vers l'extérieur par rapport à l'axe central (6).

6. Dispositif de serrage (2) selon la revendication 4 ou 5, **caractérisé en ce qu'**au moins une des au moins une découpe (50) dans un plan transversal à l'axe central (6) comprend une coupe transversale arrondie et/ou des coins arrondis.

7. Dispositif de serrage (2) selon l'une des revendications précédentes,
**caractérisé en ce que** le tronçon annexe (14), la section de serrage (18) et les tronçons d'affaiblissement de matériau (42) de la douille de serrage (12) forment un composant monobloc commun et/ou que la douille de serrage (12) et le cadre (4) forment deux composants séparés ou séparables.

8. Dispositif de serrage (2) selon l'une des revendications précédentes,
**caractérisé en ce que** le cadre (4) présente une encoche (32) qui s'étend transversalement ou obliquement par rapport à l'axe central (6), qui s'étend d'une paroi extérieure du cadre (4) à la paroi intérieure (10) du cadre (4) et qui débouche dans l'espace creux (30).

9. Dispositif de serrage (2) selon la revendication 8, **caractérisé en ce que** le système de serrage (26) de l'unité de serrage (24) comprend un fluide qui peut être amené à l'espace creux (30) par l'intermédiaire de l'encoche (32) du cadre (4), et **en ce que** l'unité de serrage (24) comprend un dispositif de montée en pression (28) au moyen duquel le fluide disposé dans l'espace creux (30) peut être soumis à une pression, la force agissant dans la direction de l'axe central (6) comprenant une force de compression.

10. Dispositif de serrage (2) selon l'une des revendications précédentes, **caractérisé par** au moins deux moyens d'étanchéité (34), qui sont chacun disposés entre la surface de contact de la douille de serrage (12) et la paroi intérieure (10) du cadre (4), qui sont chacun conçus de manière entièrement circonférentielle par rapport à l'axe central (6) et qui, vus dans la direction de l'axe central (6), sont espacés l'un de l'autre et sont disposés sur des côtés opposés l'un par rapport à l'autre par rapport à l'espace creux (30).

11. Dispositif de serrage (2) selon l'une des revendications précédentes, **caractérisé par** au moins un système de butée (44) en forme d'anneau, de cerceau ou de disque qui est fixé au cadre (4) et qui fait saillie dans la direction de l'axe central (6) par rapport à la paroi intérieure (10) du cadre (4) et limite un mouvement de la douille de serrage (12) le long d'une direction de jonction s'étendant parallèlement à l'axe central (6), le long de laquelle la douille de serrage (12) peut être insérée dans l'ouverture (8) du cadre (4) lorsqu'il est disposé dans le cadre (4), lorsqu'une position finale est atteinte dans laquelle la douille de serrage (12) repose en contact avec la zone d'épaulement.

12. Dispositif de serrage (2) selon la revendication 11, **caractérisé par** au moins un système d'engagement arrière (46) en forme d'anneau, de cerceau ou de disque qui peut être fixé de manière amovible ou est fixé au cadre (4) sur le côté opposé au système de butée (44), qui s'étend dans la direction de l'axe central (6) et chevauche au moins par endroits la douille de serrage (12) transversalement à la direction centrale et qui s'engage derrière la douille de serrage (12) disposée dans le cadre (4) à l'encontre d'un mouvement contraire au sens d'assemblage.

13. Dispositif de serrage (2) selon l'une des revendications 11 ou 12,
**caractérisé en ce que** les systèmes de butée (44) et/ou le système d'engagement arrière (46) sont amovibles ou fixés au cadre (4), notamment par fermeture à force et/ou par forme, ou non amovibles ou fixés, notamment par fermeture de matière, à force et/ou par forme.

14. Dispositif de serrage (2) selon l'une des revendications 11 ou 13,
**caractérisé en ce que** le cadre (4) et le système de butée (44) forment un composant monobloc commun.
